# FASCICULE DE BREVET EUROPEEN

(11) **EP 1 077 248 B1**
(45) Date de publication et mention de la délivrance du brevet: **01.03.2006**
(21) Numéro de dépôt: 00402067.3
(22) Date de dépôt: 20.07.2000
(51) Int. Cl.: C10K 3/00, C10B 53/00, F23G 5/027, C10L 3/00, C10G 9/00

(54) **Procédé et installation de production d'un gaz combustible à partir d'une charge riche en matière organique**
Verfahren und Anlage für die Herstellung von brennbaren Gasen aus an organischen Materialien reichen Einsätzen
Process and plant for the production of combustible gases from a feedstock rich in organic material

(30) Priorité: 16.08.1999 FR 9910576
(43) Date de publication de la demande: 21.02.2001
(73) Titulaire: Institut Français du Pétrole, 92852 Rueil Malmaison Cédex (FR)
(72) Inventeur: Marty, Eric, 69005 Lyon (FR); Martin, Gérard, 69230 Saint Genis Laval (FR); Lebas, Etienne, 38200 Seyssuel (FR)

(56) Documents cités:
- EP-A- 0 025 205
- US-A- 4 300 915
- US-A- 4 880 528

## Description

La présente invention concerne la production de gaz combustible à partir d'une charge solide contenant une fraction organique, telle que par exemple la biomasse, des déchets ménagers et/ou industriels, des déchets agricoles, des boues de station d'épuration.

L'objet de la présente invention est de produire un gaz combustible riche, dépourvu de produits lourds tels que des goudrons, et dépourvu de polluants minéraux tels que des sels alcalins. Un tel gaz combustible riche peut avantageusement être utilisé dans des dispositifs ou procédés de production d'énergie tels que des moteurs à gaz, des turbines à gaz, des chaudières ou des brûleurs. Sans sortir du cadre de l'invention, le gaz combustible riche peut ensuite subir des traitements d'amélioration, comme par exemple un traitement par vaporeformage ou par oxydation partielle, afin d'être enrichi en hydrogène.

Il existe deux grandes voies pour la production d'un gaz combustible à partir d'une charge solide contenant une fraction organique : la gazéification et la thermolyse également appelée pyrolyse. La thermolyse ou pyrolyse est une opération de dégradation thermique qui se déroule en absence totale d'oxygène. Elle conduit à la production d'un gaz à moyen ou fort pouvoir calorifique et à une phase solide riche en carbone, appelée coke. Selon la présente invention, il est possible d'améliorer le rendement énergétique global de la réaction en utilisant le résidu solide riche en carbone issu de la pyrolyse comme combustible pour chauffer le four servant à la pyrolyse.

D'autre part, la gazéification correspond à une oxydation partielle de la charge, oxydation qui est réalisée dans des conditions telles qu'elle ne produit que du gaz. Par contre elle présente l'inconvénient majeur de produire un gaz à faible pouvoir calorifique. Selon un mode préféré de la présente invention, il est également possible d'associer à l'opération de thermolyse une opération de craquage thermique des gaz de thermolyse de façon à éliminer les composés les plus lourds contenus dans les gaz issus de la thermolyse et d'obtenir finalement un gaz à fort pouvoir calorifique, et ce, tout en améliorant le rendement énergétique de production du gaz combustible.

Les installations selon l'art antérieur utilisant des procédés de gazéification pour convertir une charge solide en gaz combustible présentent des problèmes de plusieurs ordres :
- Un prétraitement important de la charge est nécessaire avant la gazéification ; ce prétraitement peut être un broyage fin et/ou un séchage important.
- Il est nécessaire de mettre en oeuvre des opérations de traitement des gaz produits afin d'en éliminer les goudrons résiduels et les sels alcalins volatils tels que des composés à base de potassium et sodium ; ces traitements sont par exemple une filtration à chaud et/ou un lavage des gaz.
- Le pouvoir calorifique des gaz produits est faible dû à une combustion et au volume d'azote apporté par l'air de gazéification.

On connaît déjà, par exemple dans la demande de brevet EP-A2-0864349, un dispositif susceptible de réaliser une opération de thermolyse et une opération de craquage thermique, le craquage thermique étant réalisé grâce aux gaz chauds ayant déjà servi à chauffer le four de thermolyse. Il est donc difficile dans ces conditions de maîtriser la température et plus précisément la montée en température du craquage thermique ; par ailleurs les températures pour le craquage restent inférieures à environ 900°C, température insuffisante pour craquer efficacement les composés lourds susceptibles de se trouver dans les gaz de thermolyse.

On connaît aussi, par le brevet US-4.300.915, un procédé pour la pyrolyse de déchets dans lequel la chaleur nécessaire au craquage des gaz de thermolyse est fournie par le mélange direct d'une partie desdits gaz de thermolyse avec les fumées issues de la combustion de l'autre partie desdits gaz de thermolyse. Le pouvoir calorifique du gaz final produit s'en trouve donc réduit d'autant et est proche en valeur de celui d'un gaz issu d'un gazéifieur conventionnel. D'autre part, le rendement énergétique global de l'invention décrite dans ce brevet est médiocre, car le résidu solide riche en carbone issu de la pyrolyse n'est pas utilisé.

Bien entendu, tous ces problèmes ont une incidence directe sur les performances des installations ainsi que sur leurs coûts.

Si l'utilisation du résidu solide de l'étape de thermolyse permet d'améliorer de façon sensible le rendement énergétique de production de gaz combustible, l'association successive d'une étape de thermolyse et d'une étape de craquage, selon un mode préféré de réalisation de-la présente invention, permet également avantageusement de résoudre notamment les problèmes énoncés ci-dessus, avec les avantages techniques dont certains peuvent être énoncés ainsi :
- Le pouvoir calorifique du gaz de thermolyse produit est élevé puisque les deux opérations de thermolyse et de craquage thermique sont effectuées en absence totale d'air. Le pouvoir calorifique attendu du gaz est ainsi de 2 à 4 fois supérieur à celui d'un gaz issu d'une opération de gazéification ; ces gaz sont donc plus facilement utilisables dans des équipements nécessitant des niveaux thermiques élevés.
- Une plus grande souplesse sur la qualité de la charge en terme de taille et de composition liée notamment à l'utilisation d'un four tournant pour la thermolyse. En effet, compte tenu du type de transport de la charge solide à l'intérieur du cylindre tournant et du temps de séjour de la phase solide, il n'est pas nécessaire d'utiliser des charges broyées et/ou calibrées, comme c'est le cas avec des procédés de gazéification mettant en oeuvre des réacteurs du type lit fluidisé ou lit fixe et dont le bon écoulement de la charge solide nécessite la mise en oeuvre de matière finement broyée et/ou calibrée.
- Un séchage limité de la charge de façon à obtenir le ratio eau/goudrons correct pendant l'étape de craquage.
- La non volatilisation des sels minéraux alcalins tels que potassium et sodium du fait de la température limitée dans le four de thermolyse ; ceci a pour conséquences un encrassement et une corrosion plus faibles des équipements situés en aval de la thermolyse.
- Les opérations de post traitements des gaz sont grandement facilitées car les gaz issus du craqueur sont dépourvus de produits lourds et ne nécessitent qu'une opération de filtration pouvant être réalisée dans des conditions simples et mettant en oeuvre des technologies éprouvées.
- Le volume des gaz à traiter est plus faible d'où une installation moins encombrante et des coûts moindres.
- Un craquage thermique du NH₃ émis au cours de la thermolyse avec formation d'azote moléculaire est possible ; ceci permet de limiter les émissions d'oxydes d'azote.

De façon avantageuse, le gaz généré par le procédé selon l'invention présente après filtration, des caractéristiques lui permettant d'être facilement utilisé dans de nombreuses applications énergétiques, sans que se posent les problèmes évoqués ci-dessus liés à la présence de goudrons et métaux alcalins volatils :
- Ce gaz peut être brûlé par un brûleur associé à un moyen de production de chaleur.
- Ce gaz peut être comprimé et être utilisé dans un moteur à gaz ou une turbine à gaz afin de produire de l'électricité et/ou de la chaleur.
- Il peut enfin être traité par des procédés de conversion, comme par exemple un traitement par vaporeformage ou par oxydation partielle, afin de l'enrichir en hydrogène.

Ainsi la présente invention a pour objet un procédé de production d'un gaz combustible à partir d'une charge riche en matières organiques, comprenant au moins une thermolyse de ladite charge suivie d'un craquage thermique des gaz issus de la thermolyse, caractérisé en ce que la thermolyse et le craquage sont réalisés dans deux moyens différents, en ce que l'on contrôle indépendamment la température de la thermolyse et celle du craquage thermique, en ce que les produits solides issus de ladite thermolyse sont envoyés dans un moyen de combustion, en ce que la chaleur générée par ladite combustion est utilisée pour réaliser la thermolyse, en ce que ladite thermolyse est opérée dans une plage de température comprise entre 300°C et 900°C sous une pression proche de la pression atmosphérique, et en ce que ledit craquage thermique de la totalité du gaz issu de la thermolyse est réalisé entre 800°C et 1200°C.

Conformément à l'invention, le procédé peut comprendre en outre une étape de refroidissement rapide des gaz issus du craquage thermique.

En outre, le procédé peut comprendre une étape de filtration des gaz de craquage refroidis.

De façon particulière, une partie desdits gaz de craquage refroidis et/ou filtrés peut être envoyée vers un moyen de production d'énergie, tel qu'un moteur ou une turbine à gaz.

Selon une caractéristique de l'invention, une partie des gaz de craquage refroidis et/ou filtrés peut être envoyée et utilisée comme combustible pour alimenter un moyen de chauffage, tel que les brûleurs du réacteur de craquage thermique.

En outre, les fumées chaudes issues du moyen de production d'énergie, tel qu'un moteur ou une turbine à gaz, peuvent être envoyées vers un moyen de récupération d'énergie.

Avantageusement, les fumées issues de la combustion des résidus solides riches en carbone, après utilisation pour le chauffage du réacteur de thermolyse, peuvent être envoyées vers un dispositif de récupération d'énergie.

En outre, le procédé peut comprendre une compression des gaz filtrés avant leur introduction dans le moyen de production d'énergie.

Selon une caractéristique intéressante de l'invention, le moyen de thermolyse et le moyen de combustion forment un ensemble compact.

L'invention concerne une installation destinée à produire un gaz combustible à partir d'une charge riche en matière organique comprenant des moyens de thermolyse de ladite charge et des moyens de craquage thermique disposés à la suite des moyens de thermolyse, caractérisée en ce qu'elle comprend des moyens destinés à réguler indépendamment la température de la thermolyse et la température du craquage thermique, des moyens de combustion des produits solides issus de ladite thermolyse pour que la chaleur générée par ladite combustion opère ladite thermolyse dans une plage de température comprise entre 300°C et 900°C sous une pression proche de la pression atmosphérique et en ce que les moyens de craquage sont agencés de telle sorte que le craquage thermique de la totalité du gaz issu de la thermolyse est réalisé entre 800°C et 1200°C.

L'installation peut comprendre un moyen de refroidissement rapide des gaz issus des moyens de craquage thermique.

L'installation peut comprendre un moyen de filtration des gaz refroidis, placé en sortie du moyen de refroidissement.

Les moyens de combustion peuvent comprendre une première alimentation pour les solides issus du moyen de thermolyse, et une deuxième alimentation pour de l'air de combustion, éventuellement préchauffé.

L'installation peut comprendre un dispositif de production d'énergie, tel qu'un moteur ou une turbine, qui reçoit les gaz issus du moyen de filtration et/ou les gaz issus du moyen de refroidissement, le dispositif permettant de produire de la chaleur et/ou de l'électricité.

Le chauffage pour le craquage thermique peut être réalisé par des moyens de combustion d'une partie des gaz issus du craquage, notamment par des brûleurs.

L'installation peut comprendre un moyen de compression des gaz craqués, refroidis et filtrés, situé en aval du moyen de filtration et en amont du moyen de production d'énergie.

Les moyens de thermolyse peuvent comporter un four tournant comprenant une enceinte rotative pour la charge, entourée d'un espace pour son chauffage.

Les moyens de combustion peuvent comprendre une sortie pour les fumées de combustion, ladite sortie étant reliée à une entrée des moyens de thermolyse.

La chaleur de combustion et les fumées issues du moyen de combustion peuvent chauffer directement les moyens de thermolyse.

Les moyens de craquage thermique peuvent comprendre une alimentation pour les gaz de thermolyse, un ensemble de tubes métalliques dans lesquels circulent les gaz de thermolyse, une enveloppe en matière réfractaire, une sortie pour les gaz craqués, un ensemble de brûleurs alimentés en air et en gaz combustible et débouchant dans l'enceinte, des moyens de régulation du débit de chaque alimentation étant en outre prévus, et une sortie pour les fumées des brûleurs.

Les moyens de craquage thermique peuvent comprendre une alimentation pour les gaz de thermolyse, une enveloppe en matière réfractaire, une sortie pour les gaz craqués, un ensemble de brûleurs débouchant chacun dans une enveloppe étanche qui dépasse à l'intérieur de l'enceinte, les brûleurs étant chacun alimentés en air et en gaz combustible, et des moyens de régulation du débit étant en outre prévus sur chaque alimentation, et au moins une sortie pour les fumées des brûleurs.

D'autres avantages, détails, caractéristiques de l'invention apparaîtront mieux à la lecture de la description des exemples suivants, nullement limitatifs, illustrés par les figures ci-annexées, parmi lesquelles :
- La figure 1 est un schéma essentiellement fonctionnel d'un mode de réalisation de l'invention;
- La figure 2 est un schéma essentiellement fonctionnel d'un autre mode de réalisation de l'invention;
- La figure 3 est un schéma d'un moyen de craquage thermique selon l'invention; et
- La figure 4 est un schéma d'un autre moyen de craquage thermique conformément à l'invention.

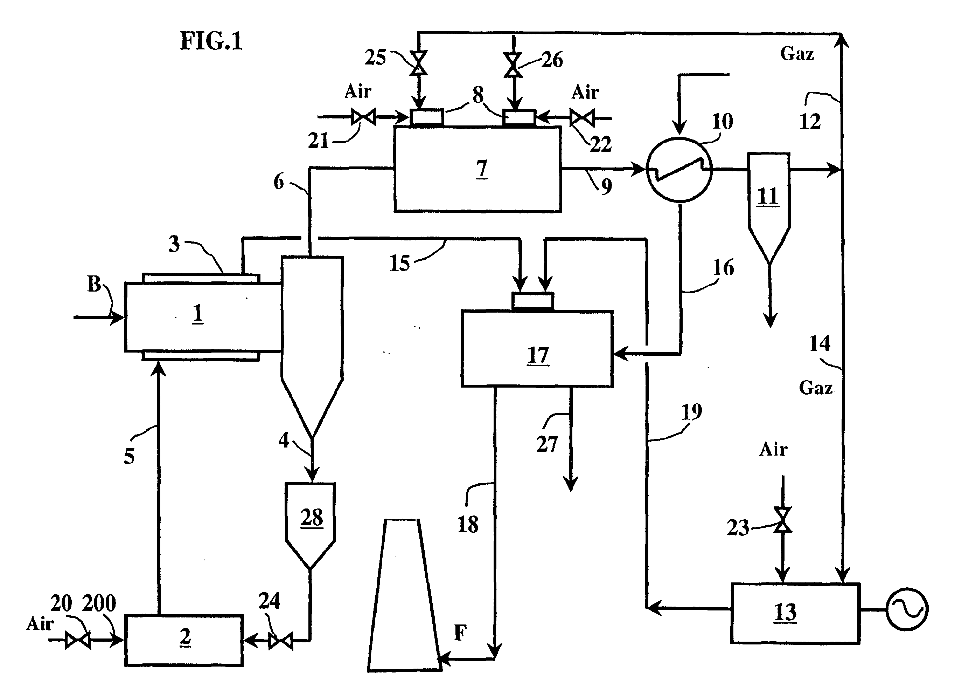

La figure 1 est donc un schéma fonctionnel montrant les principaux éléments d'un premier mode de réalisation de l'invention. L'invention va maintenant être décrite à la fois au plan fonctionnel et au plan structurel.

De façon préférentielle, le procédé selon l'invention est destiné à traiter la biomasse. Pour la thermolyse, un four tournant 1 est préférentiellement utilisé pour son aptitude à traiter des charges variées tant en taille qu'en composition. La souplesse de cet équipement peut donc permettre de l'alimenter avec une charge principale comme de la biomasse, mais également avec des mélanges de charges solides contenant de la matière organique, tels que des déchets ménagers, des déchets industriels banals, des déchets agricoles ou des boues de station d'épuration.

Il peut être nécessaire de traiter la charge brute avant la thermolyse. Cette étape de prétraitement dépend de la nature de la charge (composition, granulométrie, humidité...) et met en oeuvre des techniques conventionnelles : broyage grossier, séchage, etc... L'objectif de cette étape de prétraitement est de mettre la charge en adéquation avec les spécifications à l'entrée du four tournant 1 ; à savoir :
- La granulométrie maximum de la charge est inférieure à 30 cm et de préférence inférieure à 10 cm.
- L'humidité de la charge est inférieure à 60 % et de préférence inférieure à 20 % en poids. L'humidité de la charge a, en effet, une influence sur l'éventuelle réaction de craquage thermique du gaz qui peut suivre la thermolyse. Le rendement de craquage dépend de la quantité d'eau présente dans les gaz et donc de celle présente initialement dans la charge.

Afin de profiter de tous les avantages du procédé et dans l'éventualité d'un craquage ultérieur de la charge gazeuse issue de la pyrolyse, on cherchera à traiter des charges dont l'humidité permet de travailler dans la fenêtre optimale de fonctionnement de l'étape de craquage, et ceci sans séchage initial. Plus précisément, on cherchera à traiter des charges dont l'humidité initiale est telle que le ratio massique eau/gaz issus de la thermolyse se situe entre 0,1 et 10. On sait que la vapeur d'eau a un effet positif sur le craquage, ce qui peut limiter, voire empêcher le cokage.

A la suite de cette éventuelle étape de prétraitement, la biomasse est introduite, dans le four tournant 1 à chauffage indirect par l'intermédiaire d'un dispositif (non représenté) permettant de garantir l'étanchéité du four avec l'extérieur et d'empêcher ainsi toute entrée d'air dans le four. Le dispositif permettant de réaliser cette étanchéité peut être une vis d'Archimède, ou bien un système d'introduction de la charge par ballot compacté.

Le four tournant utilisé ici pour la thermolyse comprend une enceinte rotative 1 entourée d'un espace annulaire 3 pour son chauffage.

Sans sortir du cadre de l'invention, un moyen de thermolyse tel qu'un système à grille cheminante, à table vibrante... muni d'un chauffage indirect peut être prévu.

Au cours de sa progression dans l'enceinte rotative 1 et sous l'action de la chaleur, la charge est débarrassée de son humidité résiduelle puis subit une dégradation thermique en absence totale d'air, c'est-à-dire une pyrolyse, qui aboutit à la formation d'une phase gazeuse (gaz brut) et d'un résidu solide riche en carbone (coke).

La biomasse et les gaz issus de la décomposition thermique circulent ici à co-courant dans le four. Cette opération est menée à une température comprise entre 300 et 900°C et de préférence entre 500 et 700°C et sous une pression proche de la pression atmosphérique. Le temps de séjour des solides à l'intérieur du four est suffisamment long pour permettre la dégradation totale de la matière organique. Il est compris entre 30 et 180 minutes et plus précisément entre 45 et 90 minutes. Dans ces conditions de temps de séjour, et compte tenu des profils de température dans le four tournant, la présence de goudrons dans la phase gazeuse est minimisée.

Les conditions opératoires de l'opération de thermolyse sont préférentiellement choisies de façon à ce que les critères suivants soient satisfaits simultanément :
- La vitesse de chauffe de la charge doit être telle qu'elle permette de minimiser la formation de produits lourds type goudrons ; elle est comprise entre 5 et 100°C/min.
- La température finale atteinte par la charge doit permettre d'optimiser le rendement en gaz au détriment du rendement en produit solide, et en produits lourds type goudrons.
- La température finale atteinte par la phase solide ne doit pas être supérieure à la température de volatilisation des principaux sels alcalins tels que les sels de potassium et de sodium.

A la sortie du four rotatif, le coke est évacué par un dispositif garantissant l'étanchéité vis-à-vis de l'extérieur (vanne rotative, sas à vannes guillotines, ou tout autre dispositif équivalent permettant de réaliser cette opération non représentés). Le coke est alors acheminé vers un dispositif de combustion 2 qui a pour but de générer l'énergie nécessaire au chauffage du four de thermolyse 1, c'est-à-dire aux opérations de séchage et de pyrolyse se déroulant dans l'enceinte du four tournant 1.

Le dispositif de combustion 2 peut être un lit fluidisé dense, un lit fixe, un lit transporté, un foyer à vis, un foyer à grille ou tout autre type de dispositif permettant de brûler des combustibles solides. Le dispositif de combustion 2 est alimenté par de l'air de combustion via une ligne spécifique 20a ; l'air peut éventuellement être préchauffé pour améliorer le rendement global de l'opération. Un moyen 20 de régulation du débit d'air peut en outre être disposé sur la conduite 20a afin de réguler la température de combustion du coke dans le moyen 2, donc la température de thermolyse.

Selon un mode de réalisation de l'invention, les fumées chaudes générées par la combustion du coke sont envoyées via une ou plusieurs conduites 5 dans une double enveloppe 3 entourant l'enceinte rotative 1, dans laquelle elles circulent. La circulation des fumées chaudes dans la double enveloppe 3 peut être effectuée à contre-courant ou à co-courant de la charge solide circulant à l'intérieur du four 1, en fonction des conditions de vitesse de chauffe et de température finale recherchées. Les fumées chaudes circulant dans la double enveloppe 3 sont à une température comprise entre 400 et 1200°C et de préférence entre 600 et 1000°C. Elles transfèrent leur énergie à la paroi métallique de l'enceinte rotative 1 par rayonnement et par convection.

Sur la figure 1, la liaison pour le transport du coke entre le moyen de thermolyse 1 et le moyen de combustion 2 est référencée 4 tandis que la liaison pour le transport des fumées entre le moyen de combustion 2 et le moyen de thermolyse 1 est repéré 5.

Sur la liaison 4 peut être prévu un moyen de stockage intermédiaire 28 destiné à permettre la régulation du débit de coke. Un moyen 24 tel qu'une vanne rotative, une vis d'archimède ou tout autre moyen équivalent permettant de réguler le débit de coke peut en outre être installé sur la conduite entre la sortie du stockage 28 et l'entrée du moyen de combustion 2. Le moyen 24 permet de réguler le débit de combustible dans le moyen 2 donc la température de combustion du coke et donc la température de la thermolyse.

Les gaz de pyrolyse sortant du moyen de thermolyse 1 et issus de la décomposition de la charge riche en matières organiques sont, selon cet exemple de réalisation, à une température comprise entre 300 et 900°C et de préférence entre 500 et 700°C. Ces gaz sont composés d'un mélange de vapeur d'eau résultant du séchage de la charge et des réactions de pyrolyse, de gaz incondensables à température ambiante tels que CO, CO₂, H₂, CH₄, C₂Hₓ, et C₃Hy, NH₃ et de vapeurs d'hydrocarbures plus lourds comportant au moins 4 atomes de carbone.

Ces gaz peuvent également contenir une faible quantité de gaz acides tels que HCl et H₂S ainsi que des particules en suspension. Selon un mode préférée de réalisation, cette phase gazeuse peut être dirigée vers un réacteur 7 via une liaison 6, dans lequel est effectuée une opération de craquage thermique dont le but est de convertir les vapeurs d'hydrocarbures lourds en gaz incondensables.

La réaction de craquage thermique est réalisée à une température comprise entre 800 et 1200°C et de préférence entre 900 et 1100°C.

Conformément à l'invention, l'énergie nécessaire à la réalisation de cette opération de craquage est apportée par des brûleurs extérieurs 8 alimentés par un combustible qui peut être une fraction du gaz craqué et recyclé.

Sans sortir du cadre de l'invention, les brûleurs 8 peuvent être alimentés par un combustible traditionnel tel que du gaz naturel, du gaz de pétrole liquéfié ou autre.

Des vannes 25, 26 sont préférentiellement prévues pour réguler ledit combustible tandis que d'autres vannes 21, 22 peuvent être disposées sur les arrivées d'air, l'ensemble permettant de réguler la température de craquage ainsi que la vitesse de montée en température.

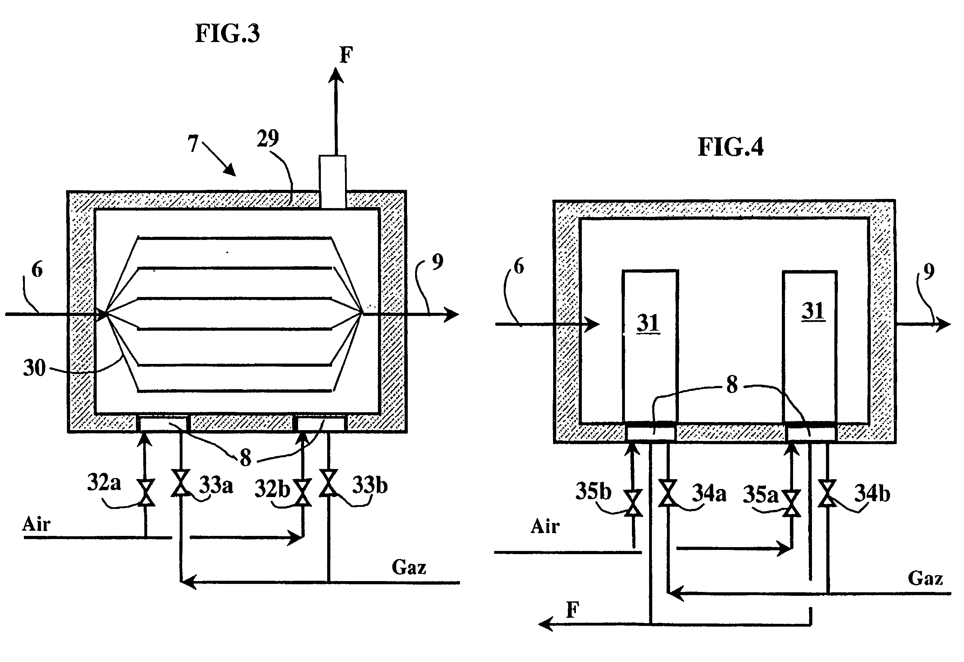

Le craquage est effectué en absence totale d'air et les effluents des brûleurs de chauffage 8 de la charge ne sont à aucun moment en contact avec la charge à craquer comme il va maintenant être expliqué, en relation avec les figures 3 et 4.

Selon la figure 3, le réacteur de craquage 7 est constitué d'une enveloppe en matériaux réfractaires 29 garnie de tubes métalliques 30 dans lesquels circule la charge à craquer qui entre par la ligne 6. Les brûleurs 8 sont implantés dans la paroi en matériaux réfractaires et chauffent la paroi extérieure des tubes métalliques 30. L'arrangement des tubes 30 et des brûleurs 8 est choisi de façon à obtenir la vitesse de montée en température et le temps de séjour optimal pour craquer les gaz avec le meilleur taux de conversion.

Le meilleur taux de conversion est obtenu lorsque la totalité des hydrocarbures lourds présents dans la charge sont convertis en gaz légers. Les profils température/temps de séjour de la charge ainsi que la teneur en eau sont donc choisis de façon à maximiser la conversion des goudrons tout en minimisant la formation de coke.

Des moyens de régulation de la température de craquage sont préférentiellement prévus, sous la forme de vannes : les unes, 33a, 33b, pour le gaz combustible ; d'autres 32a et 32b pour l'air de combustion.

Un temps de séjour des gaz dans le moyen de craquage conforme à l'invention est compris entre 0,1 et 10 s, préférentiellement entre 1 et 5 s.

Un second arrangement possible du réacteur 7 est illustré par la figure 4 : le réacteur 7 est ici constitué d'une enveloppe 29 en matériaux réfractaires inertes dans laquelle circule la charge à craquer. Les brûleurs 8 débouchent dans des enveloppes 31 étanches qui pénètrent dans l'espace interne du réacteur 7. Les enveloppes 31 peuvent être en céramique ou en carbure de silicium. Le transfert thermique entre les brûleurs et le gaz à craquer est dû au rayonnement des tubes 31. L'arrangement des brûleurs 8 est choisi de façon à obtenir la vitesse de montée en température et le temps de séjour optimal pour craquer les gaz avec le meilleur taux de conversion.

Les températures de craquage ainsi que les vitesses de montée en température des gaz à l'intérieur du craqueur 7 sont régulés par des vannes disposées sur les arrivées de gaz combustible 34a, 34b et sur les arrivées d'air 35a, 35b.

Un des problèmes rencontrés dans les réacteurs de craquage est la formation de coke. La formation de coke en trop grande quantité est en effet de nature à encrasser les brûleurs de préchauffage de la charge et à limiter les transferts thermiques. En fonction de la vitesse de formation du coke pendant l'étape de craquage des gaz, il peut être prévu la mise en place de deux réacteurs de craquage fonctionnant en parallèle : pendant que l'un des deux réacteurs est utilisé pour craquer les gaz, le second est en phase de décokage. Cette opération de décokage est réalisée par des moyens classiques tels qu'injection d'air et/ou de vapeur d'eau.

Une autre solution, telle que décrite par exemple selon le mode de réalisation de la figure 3, consiste à utiliser un seul craqueur 7 muni de plusieurs tubes, un seul tube étant en décokage pendant une période donnée.

Dans tous les cas, à la sortie du craqueur, le gaz craqué est essentiellement constitué de gaz légers incondensables tels que CO, CO₂, H₂, CH₄, C₂Hₓ, et de particules de coke en suspension.

Le gaz craqué est préférentiellement refroidi rapidement à une température finale comprise entre 100 et 500°C, et de préférence entre 200 et 300°C, de façon à stopper toutes les réactions chimiques. Une liaison 9 permet de véhiculer les gaz craqués entre la sortie du réacteur 7 et l'entrée d'un moyen de refroidissement 10.

Le gaz refroidi est ensuite filtré dans un moyen approprié 11 afin d'en éliminer les particules de coke en suspension. La filtration dans le moyen 11 est opérée à une température finale comprise entre 100 et 500°C, et de préférence entre 200 et 300°C. La filtration est réalisée par tous procédés et matériaux, connus en eux-mêmes tels que filtre à cartouches métalliques, filtre à manches,... L'étape de filtration permet donc d'obtenir un gaz craqué débarrassé des poussières de coke et qui peut donc être valorisé car ayant un pouvoir calorifique élevé.

A titre d'exemple non limitatif, un tel gaz peut être utilisé dans une chaudière, un moteur thermique ou une turbine à gaz.

Par ailleurs, sans sortir du cadre de l'invention, un moyen de compression (non représenté) peut être prévu pour le gaz en sortie du moyen 11 de filtration.

En sortie du moyen 11 de filtration, le gaz craqué, refroidi et filtré peut être divisé en deux flux : l'un pour alimenter les brûleurs 8 du moyen 7 de craquage thermique : une liaison 12 est alors prévue à cet effet. Le deuxième flux de gaz est utilisé comme énoncé ci-avant, pour alimenter un moyen 13 de production d'énergie. Une conduite spécifique 14 est ici nécessaire. Comme il a été énoncé ci-avant, les brûleurs 8 peuvent ne pas être alimentés par le gaz craqué, mais aussi par un autre combustible approprié.

Le moyen 13 de production d'énergie est par ailleurs alimenté en air par une ligne (non référencée) préférentiellement équipée d'un moyen de régulation 23.

Une possibilité, pour optimiser le rendement thermique, peut en outre consister à envoyer les fumées issues de la double enveloppe 3 vers un moyen 17 de récupération de chaleur, grâce à une conduite appropriée 15.

Les fumées F issues du moyen 17 de récupération de chaleur sont ensuite évacuées via une ligne 18 par exemple vers une cheminée (non référencée).

L'énergie (vapeur, eau chaude...) issue du moyen 17 est évacuée via des moyens appropriés 27.

Par ailleurs une liaison 16 peut être prévue entre le moyen de refroidissement 10 et le moyen 17 de récupération de chaleur (chaudière ou autre) afin de transférer de la chaleur du moyen 10 vers le moyen 17.

D'autre part les fumées issues du moyen 13 peuvent être envoyés via une conduite 19 vers le moyen 17 afin d'augmenter le rendement thermique global de l'installation.

L'installation qui vient d'être décrite permet donc avantageusement de réguler indépendamment la température de la thermolyse et du craquage thermique.

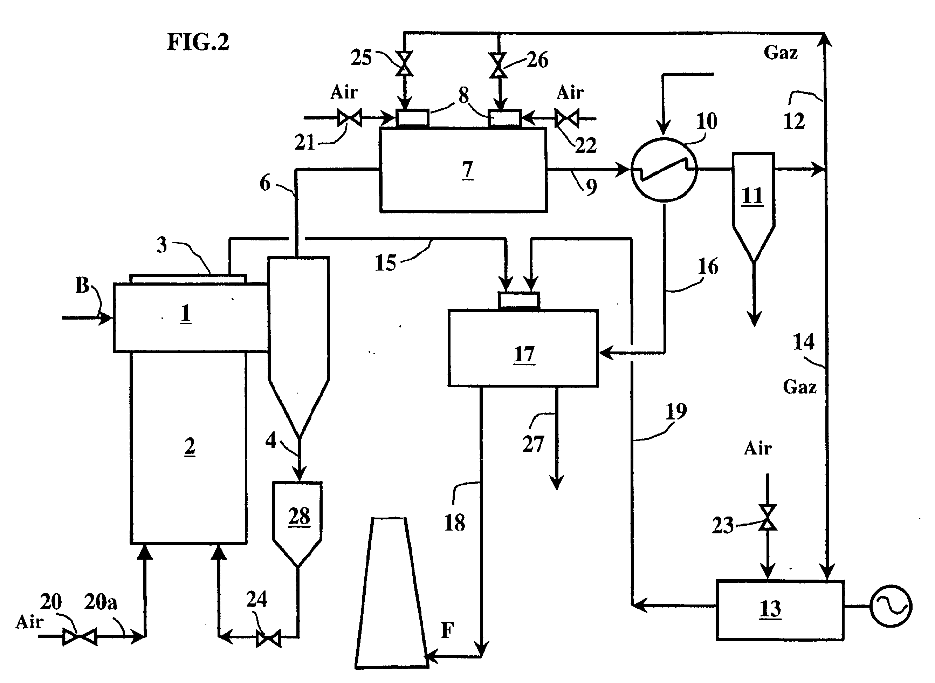

La figure 2 illustre un mode de réalisation de l'invention qui diffère de celui de la figure 1 au niveau des moyens de thermolyse 1 et de combustion 2.

Selon le deuxième mode de réalisation, les réacteurs de thermolyse et de combustion sont confondus en un seul équipement.

Le moyen de combustion 2 peut être placé par exemple au-dessous de tout ou partie du moyen de thermolyse 1. Il peut être constitué d'une grille cheminante étroite ou d'un couloir fluidisé compartimenté ou encore d'une auge à vis. Le réglage du profil thermique le long de l'axe dudit moyen de combustion 2, peut se faire par le biais des débits d'air des caissons associés audit moyen de combustion 2 afin de répondre aux besoins énergétiques locaux du cylindre tournant. Grâce à cette disposition du moyen de combustion 2, on gagne en compacité, on limite les pertes thermiques, on évite les liaisons entre le moyen de combustion 2 et le thermolyseur 1 et on améliore le rendement énergétique en opérant à des excès d'air plus faibles, puisque la production d'énergie est couplée à l'utilisation.

## Revendications

1. Procédé de production d'un gaz combustible à partir d'une charge riche en matières organiques, comprenant au moins une thermolyse de ladite charge suivie d'un craquage thermique des gaz issus de la thermolyse, **caractérisé en ce que** la thermolyse et le craquage sont réalisés dans deux moyens différents (1, 7), **en ce que** l'on contrôle indépendamment la température de la thermolyse et celle du craquage thermique, **en ce que** les produits solides issus de ladite thermolyse sont envoyés dans un moyen de combustion (2), **en ce que** la chaleur générée par ladite combustion est utilisée pour réaliser la thermolyse, **en ce que** ladite thermolyse est opérée dans une plage de température comprise entre 300°C et 900°C sous une pression proche de la pression atmosphérique, et **en ce que** ledit craquage thermique de la totalité du gaz issu de la thermolyse est réalisé entre 800°C et 1200°C.

2. Procédé selon la revendication 1, **caractérisé en ce qu'**il comprend en outre une étape de refroidissement rapide des gaz issus du craquage thermique.

3. Procédé selon l'une quelconque des revendications 1 ou 2, **caractérisé en ce qu'**il comprend en outre une étape de filtration des gaz de craquage refroidis.

4. Procédé selon l'une quelconque des revendications 1 à 3, **caractérisé en ce qu'**une partie desdits gaz de craquage refroidis et/ou filtrés est envoyée vers un moyen de production d'énergie (13), tel qu'un un moteur ou une turbine.

5. Procédé selon l'une quelconque des revendications 1 à 4, **caractérisé en ce qu'**une partie des gaz de craquage est envoyée et utilisée comme combustible pour opérer ledit craquage thermique.

6. Procédé selon l'une quelconque des revendications 4 ou 5, **caractérisé en ce que** les fumées issues du moyen (13) de production d'énergie sont envoyées vers un moyen (17) de récupération d'énergie.

7. Procédé selon l'une quelconque des revendications précédentes, **caractérisé en ce que** les fumées de combustion, après chauffage pour la thermolyse, sont envoyées vers un moyen (17) de récupération d'énergie.

8. Procédé selon l'une quelconque des revendications 3 à 7, **caractérisé en ce qu'**il comprend en outre une compression des gaz filtrés avant leur Introduction dans le moyen de production d'énergie (13).

9. Procédé selon la revendication 1, **caractérisé en ce que** le moyen de thermolyse (1) et le moyen de combustion (2) forment un ensemble compact.

10. Installation destinée à produire un gaz combustible à partir d'une charge riche en matière organique comprenant des moyens (1) de thermolyse de ladite charge et des moyens (7) de craquage thermique disposés à la suite des moyens de thermolyse, **caractérisée en ce qu'**elle comprend des moyens (20-26) destinés à réguler indépendamment la température de la thermolyse et la température du craquage thermique et des moyens de combustion (2) des produits solides issus de ladite thermolyse pour que la chaleur générée par ladite combustion opère ladite thermolyse dans une plage de température comprise entre 300°C et 900°C sous une pression proche de la pression atmosphérique et **en ce que** les moyens de craquage (7) sont agencés de telle sorte que le craquage thermique de la totalité du gaz issu de la thermolyse est réalisé entre 800°C et 1200°C.

11. Installation selon la revendication 10, qui comprend en outre un moyen (10) de refroidissement rapide des gaz issus des moyens (7) de craquage thermique.

12. Installation selon la revendication 11 qui comprend en outre un moyen (11) de filtration des gaz refroidis, placé en sortie du moyen (10) de refroidissement.

13. Installation selon l'une quelconque des revendications 10 à 12, dans laquelle lesdits moyens de combustion (2) comprennent une première alimentation (4) pour les solides issus du moyen de thermolyse (1), et une deuxième alimentation (20a) pour de l'air de combustion, éventuellement préchauffé.

14. Installation selon l'une quelconque des revendications 12 ou 13, qui comprend en outre un dispositif (13) de production d'énergie, tel qu'un moteur ou une turbine, qui reçoit les gaz issus du moyen (11) de filtration et/ou les gaz issus du moyen de refroidissement, ledit dispositif (13) permettant de produire de la chaleur et/ou de l'électricité.

15. Installation selon l'une quelconque des revendications 10 à 14, dans laquelle le chauffage pour le craquage thermique est réalisé par des moyens (8) de combustion d'une partie des gaz issus du craquage.

16. Installation selon l'une quelconque des revendications 10 à 15, qui comprend en outre un moyen de compression des gaz craqués, refroidis et filtrés, situé en aval du moyen de filtration et en amont du moyen de production d'énergie (13).

17. Installation selon l'une quelconque des revendications 10 à 16, dans laquelle les moyens de thermolyse (1, 3) comportent un four tournant comprenant une enceinte rotative (1) pour la charge, entourée d'un espace (3) pour son chauffage.

18. Installation selon l'une quelconque des revendications 10 à 17, dans laquelle les moyens de combustion (2) comprennent une sortie (5) pour les fumées de combustion, ladite sortie étant reliée à une entrée des moyens de thermolyse (1, 3).

19. Installation selon l'une quelconque des revendications 10 à 18, dans laquelle la chaleur de combustion et les fumées issues du moyen de combustion (2) chauffent directement les moyens de thermolyse (1).

20. Installation selon l'une quelconque des revendications 10 à 19, dans laquelle les moyens de craquage thermique (7) comprennent une alimentation (6) pour les gaz de thermolyse, un ensemble de tubes métalliques (30) dans lesquels circulent les gaz de thermolyse, une enveloppe en matière réfractaire (29), une sortie (9) pour les gaz craqués, un ensemble de brûleurs (8) alimentés en air et en gaz combustible et débouchant dans l'enceinte (29), des moyens (32a, 32b, 33a, 33b) de régulation du débit de chaque alimentation étant en outre prévus, et une sortie pour les fumées des brûleurs.

21. Installation selon l'une quelconque des revendications 10 à 20, dans laquelle les moyens (7) de craquage thermique comprennent une alimentation (6) pour les gaz de thermolyse, une enveloppe (29) en matière réfractaire, une sortie (9) pour les gaz craqués, un ensemble de brûleurs (8) débouchant chacun dans une enveloppe étanche (31) qui dépasse à l'intérieur de l'enceinte (29), les brûleurs (8) étant chacun alimentés en air et en gaz combustible, et des moyens (34a, 34b, 35a, 35b) de régulation du débit étant en outre prévus sur chaque alimentation, et au moins une sortie pour les fumées des brûleurs.

## Patentansprüche

1. Verfahren zur Herstellung eines brennbaren Gases aus einer an organischen Substanzen reichen Beschickung, enthaltend mindestens eine Thermolyse der besagten Beschickung, gefolgt von einer thermischen Spaltdestillation der aus der Thermolyse stammenden Gase, **dadurch gekennzeichnet, dass** die Thermolyse und die Spaltdestillation in zwei verschiedenen Mitteln (1, 7) durchgeführt werden, dass man die Temperatur der Thermolyse und die der thermischen Spaltdestillation unabhängig voneinander regelt, dass die festen Produkte der besagten Thermolyse in ein Verbrennungsmittel (2) geschickt werden, dass die durch die besagte Verbrennung erzeugte Wärme für die Durchführung der Thermolyse verwendet wird, dass die besagte Thermolyse in einem Temperaturbereich zwischen 300°C und 900°C unter einem Druck nahe dem Atmosphärendruck betrieben wird, und dass die besagte thermische Spaltdestillation der Gesamtheit des aus der Thermolyse stammenden Gases zwischen 800°C und 1200°C durchgeführt wird.

2. Verfahren nach dem Anspruch 1, **dadurch gekennzeichnet, dass** es außerdem einen Schritt der schnellen Abkühlung des aus der thermischen Spaltdestillation abgeleiteten Gases umfasst.

3. Verfahren nach einem der Ansprüche 1 oder 2, **dadurch gekennzeichnet, dass** es außerdem einen Schritt der Filtrierung des Gases der abgekühlten Spaltdestillation umfasst.

4. Verfahren nach einem der Ansprüche 1 bis 3, **dadurch gekennzeichnet, dass** ein Teil der besagten abgekühlten und/oder gefilterten Gase der Spaltdestillation zu einem Energieerzeugungsmittel (13), wie zum Beispiel einem Motor oder einer Turbine, geleitet wird.

5. Verfahren nach einem der Ansprüche 1 bis 4, **dadurch gekennzeichnet, dass** ein Teil der Gase der Spaltdestillation zugeleitet und als Brennstoff zum Betreiben der besagten thermischen Spaltdestillation verwendet wird.

6. Verfahren nach einem der Ansprüche 4 bis 5, **dadurch gekennzeichnet, dass** die von den Energieerzeugungsmitteln (13) abgeleiteten Rauchgase einem Energierückgewinnungsmittel (17) zugeleitet werden.

7. Verfahren nach einem der vorhergehenden Ansprüche, **dadurch gekennzeichnet, dass** die Rauchgase der Verbrennung nach der Erwärmung für die Thermolyse einem Energierückgewinnungsmittel (17) zugeleitet werden.

8. Verfahren nach einem der Ansprüche 3 bis 7, **dadurch gekennzeichnet, dass** es außerdem eine Verdichtung der filtrierten Gase vor deren Einleitung in die Energieerzeugungsmittel (13) umfasst.

9. Verfahren nach dem Anspruch 1, **dadurch gekennzeichnet, dass** die Thermolysemittel (1) und das Verbrennungsmittel (2) eine kompakte Einheit bilden.

10. Anlage zur Herstellung eines brennbaren Gases ausgehend von einer an organischen Substanzen reichen Beschickung, umfassend Mittel (1) zur Thermolyse der besagten Beschickung und Mittel (7) für die thermische Spaltdestillation, welche hinter den Thermolysemitteln angeordnet sind, **dadurch gekennzeichnet, dass** sie Mittel (20 bis 26), welche zur unabhängigen Regelung der Thermolysetemperatur und der Temperatur der thermischen Spaltdestillation ausgelegt sind, und Verbrennungsmittel (2) für die aus der besagten Thermolyse abgeleiteten festen Produkte umfasst, damit die durch die besagte Verbrennung erzeugte Wärme die besagte Thermolyse in einem Temperaturbereich zwischen 300°C und 900°C unter einem Druck nahe dem atmosphärischen Druck betreibt, und dass die Mittel zur Spaltdestillation (7) derart ausgelegt sind, dass die thermische Spaltdestillation der Gesamtheit des aus der Thermolyse abgeleiteten Gases zwischen 800°C und 1200°C durchgeführt wird.

11. Anlage nach dem Anspruch 10, welche außerdem ein Mittel (10) für die schnelle Abkühlung der aus den Mitteln (7) zur thermischen Spaltdestillation abgeleiteten Gase umfasst.

12. Anlage nach dem Anspruch 11, welche außerdem ein Filtermittel (11) für die abgekühlten Gase umfasst, welches am Ausgang der Abkühlungsmittel (10) angeordnet ist.

13. Anlage nach einem der Gase 10 bis 12, bei welcher die besagten Verbrennungsmittel (2) eine erste Zufuhr (4) für die aus dem Thermolysemittel (1) abgeleiteten Feststoffe und eine zweite Zufuhr (20a) für eventuell vorbeheizte Verbrennungsluft umfassen.

14. Anlage nach einem der Ansprüche 12 oder 13, welche außerdem eine Vorrichtung (13) für die Energieerzeugung, wie zum Beispiel einen Motor oder eine Turbine, welche die aus dem Filtrier den Filtriermitteln (11) abgeleiteten Gase oder die aus den Abkühlungsmitteln abgeleiteten Gase aufnimmt, umfasst, wobei die besagte Vorrichtung (13) die Erzeugung von Wärme und/oder Elektrizität ermöglicht.

15. Anlage nach einem der Ansprüche 10 bis 14, bei welcher die Erwärmung für die thermische Spaltdestillation von Mitteln (8) für die Verbrennung eines Teils der aus der Spattdestillation abgeleiteten Gase durchgeführt wird.

16. Anlage nach einem der Ansprüche 10 bis 15, welche außerdem ein Mittel zur Komprimierung der spaltdestillierten Gase, abgekühlt und filtriert, umfaßt, welches stromabwärts von dem Filtermittel und stromaufwärts von dem Energieerzeugungsmittel (13) angeordnet ist.

17. Anlage nach einem der Ansprüche 10 bis 16, bei welcher die Thermolysemittel (1, 3) einen Trommelofen beinhalten, welcher einen drehbaren Behälter (1) für die Beschickung umfasst, welcher von einem Raum (3) für die Erwärmung des Trommelofens umgeben ist.

18. Anlage nach einem der Ansprüche 10 bis 17, bei welcher die Verbrennungsmittel (2) einen Ausgang (5) für die Verbrennungsrauchgase umfassen, wobei der besagte Ausgang mit einem Eingang der Thermolysemittel (1, 3) verbunden ist.

19. Anlage nach einem der Ansprüche 10 bis 18, bei welcher die Verbrennungswärme und die von den Verbrennungsmittein (2) abgeleiteten Rauchgase unmittelbar die Thermolysemittel (1) erwärmen.

20. Anlage nach einem der Ansprüche 10 bis 19, bei welcher die Mittel für die thermische Spaltdestillation (7) eine Zufuhr (6) für die Thermolysegase, eine Anordnung von metallischen Rohren (30), in welchen die Thermolysegase umlaufen, eine Ummantelung aus hitzebeständigem Material (29), einen Ausgang (9) für die spaltdestillierten Gase, eine Anordnung von mit Luft und brennbaren Gasen gespeisten und in die Einfassung (29) einmündenden Brennern (8), wobei Mittel (32a, 32b, 33a, 33b) für die Regelung des Durchflusses jeder Speisung zusätzlich vorgesehen sind, und einen Ausgang für die Rauchgase der Brenner umfassen.

21. Anlage nach einem der Ansprüche 10 bis 20, bei welcher die Mittel (7) für die thermische Spaltdestillation eine Zufuhr (6) für die Thermolyegase, eine Ummantelung (29) aus hitzebeständigem Material, einen Ausgang (9) für die spaltdestillierten Gase, eine Anordnung von jeweils in eine undurchlässige Ummantelung (31), welche über die Innenseite der Ummantelung (29) übersteht, einmündenden Brennern (8), wobei die Brenner (8) jeweils mit Luft und mit brennbarem Gas gespeist werden und wobei Mittel (34a, 34b, 35a, 35b) für die Durchflussregelung zusätzlich in jeder Zufuhr vorgesehen sind, und mindestens einen Ausgang für die Rauchgase der Brenner umfassen.

## Claims

1. Process for production of a combustible gas from a feed-stock rich in organic materials, comprising at least thermolysis of the said feed-stock followed by thermal cracking of the gases emanating from the thermolysis, **characterised by** the fact that the thermolysis and the cracking are effected in two different means (1, 7), by the fact that the temperature of the thermolysis and that of the thermal cracking are controlled independently, by the fact that the solid products emanating from the said thermolysis are sent into a combustion means (2), by the fact that the heat generated by the said combustion is used to effect the thermolysis, by the fact that the said thermolysis is performed within a temperature range of between 300°C and 900°C under a pressure close to atmospheric pressure, and by the fact that the said thermal cracking of the whole of the gas from the thermolysis is effected between 800°C and 1200°C.

2. Process as described in claim 1, **characterised by** the fact that it also comprises a step of rapid cooling of the gases emanating from the thermal cracking.

3. Process as described in any one of claims 1 or 2, **characterised by** the fact that it also comprises a step of filtration of the cooled cracking gases.

4. Process as described in any one of claims 1 to 3, **characterised by** the fact that a part of the said cooled and/or filtered cracking gases is sent to a means for energy production (13), such as an engine or a turbine.

5. Process as described in any one of claims 1 to 4, **characterised by** the fact that a part of the cracking gases is sent and used as fuel to perform the said thermal cracking.

6. Process as described in any one of claims 4 or 5, **characterised by** the fact that the fumes from the means (13) for energy production are sent to an energy recovery means (17).

7. Process as described in any one of the preceding claims, **characterised by** the fact that the combustion fumes, after heating for thermolysis, are sent to an energy recovery means (17).

8. Process as described in any one of claims 3 to 7, **characterised by** the fact that it also comprises compression of the filtered gases before their introduction into the means for energy production (13).

9. Process as described in claim 1, **characterised by** the fact that the thermolysis means (1) and the combustion means (2) form a compact unit.

10. Plant intended to produce a combustible gas from a feed-stock rich in organic matter comprising means (1) for thermolysis of the said feed-stock and means (7) for thermal cracking arranged following the thermolysis means, **characterised by** the fact that it comprises means (20-26) intended to independently regulate the thermolysis temperature and the thermal cracking temperature and means (2) for combustion of the solid products emanating from the said thermolysis so that the heat generated by the said combustion performs the said thermolysis in a temperature range of between 300°C and 900°C under a pressure close to atmospheric pressure and by the fact that the cracking means (7) are so arranged that thermal cracking of the whole of the gas emanating from the thermolysis is effected between 800°C and 1200°C.

11. Plant as described in claim 10, which also comprises a means (10) for rapid cooling of the gases emanating from the thermal cracking means (7).

12. Plant as described in claim 11 , which also comprises a means (11) for filtration of the cooled gases, positioned at the outlet of the cooling means (10).

13. Plant as described in any one of claims 10 to 12, in which the said combustion means (2) comprise a first supply (4) for the solids emanating from the thermolysis means (1), and a second supply (20a) for the combustion air, optionally preheated.

14. Plant as described in any one of claims 12 or 13, which also comprises a device (13) for energy production, such as an engine or a turbine, which receives the gases emanating from the filtration means (11) and/or the gases emanating from the cooling means, the said device (13) permitting production of heat and/or electricity.

15. Plant as described in any one of claims 10 to 14, in which the heating for the thermal cracking is effected by means (8) for combustion of a part of the gases emanating from the cracking.

16. Plant as described in any one of claims 10 to 15, which also comprises a means for compression of the cracked, cooled and filtered gases, situated downstream of the filtration means and upstream of the energy production means (13).

17. Plant as described in any one of claims 10 to 16, in which the thermolysis means (1, 3) include a rotary kiln comprising a rotary chamber (1) for the feed-stock, surrounded by a space (3) for its heating.

18. Plant as described in any one of claims 10 to 17, in which the combustion means (2) include an outlet (5) for the combustion fumes, the said outlet being connected to an intake of the thermolysis means (1, 3).

19. Plant as described in any one of claims 10 to 18, in which the combustion heat and the fumes emanating from the combustion means (2) directly heat the thermolysis means (1) .

20. Plant as described in any one of claims 10 to 19, in which the thermal cracking means (7) include a supply (6) for the thermolysis gases, a set of metal pipes (30) in which the thermolysis gases circulate, a casing made of refractory material (29), an outlet (9) for the cracked gases, a set of burners (8) supplied with air and with combustible gas and emerging in the chamber (29), means (32a, 32b, 33a, 33b) for regulating the flow-rate of each supply also being provided, and an outlet for the fumes from the burners.

21. Plant as described in any one of claims 10 to 20, in which the thermal cracking means (7) include a supply (6) for the thermolysis gases, a casing (29) made of refractory material, an outlet (9) for the cracked gases, a set of burners (8) each emerging in a sealed casing (31) which projects inside the chamber (29), the burners (8) each being supplied with air and combustible gas, and means (34a, 34b, 35a, 35b) for flow-rate control also being provided in each supply, and at least one outlet for the fumes from the burners.
